# FASCICULE DE BREVET EUROPEEN

(11) **EP 2 105 331 B1**
(45) Date de publication et mention de la délivrance du brevet: **27.10.2010**
(21) Numéro de dépôt: 09153229.1
(22) Date de dépôt: 19.02.2009
(51) Int. Cl.: B60H 3/06, B62D 25/08

(54) **Trappe d'acces a un filtre a pollens pour automobile**
Zugriffsklappe zu einem Pollenfilter für ein Kraftfahrzeug
Door for accessing a pollen filter for an automobile

(30) Priorité: 26.03.2008 FR 0851936
(43) Date de publication de la demande: 30.09.2009
(73) Titulaire: Peugeot Citroën Automobiles SA, 78943 Vélizy-Villacoublay Cedex (FR)
(72) Inventeur: Malaubier, Philippe, 78550, RICHEBOURG (FR); Renaud, Fabrice, 91570, BIEVRES (FR)

(56) Documents cités:
- EP-A- 0 588 708
- EP-A- 0 744 309
- DE-A- 19 734 146
- DE-B-102004 051 198
- FR-A- 2 710 009
- FR-A- 2 711 548

## Description

La présente invention se rapporte à un dispositif d'accès à un filtre à air, notamment à un filtre à pollens, équipant généralement un groupe de climatisation d'un véhicule automobile. L'invention se rapporte particulièrement à une trappe d'accès équipant une grille d'auvent et adaptée à protéger le filtre des projections et ruissellements de liquides, notamment en provenance du pare-brise.

Le filtre à pollens est généralement disposé dans une zone d'auvent, confinée entre le tableau de bord, à l'arrière, et, à l'avant, par une paroi isolant la zone d'auvent d'avec le compartiment moteur. La grille d'auvent vient capoter la zone d'auvent, à l'avant du pare-brise. La grille d'auvent a en outre pour objets :
- le captage de l'air destiné à la ventilation ou la climatisation de l'habitacle, cet air étant ensuite filtré par le filtre à pollens disposé sous la grille d'auvent ;
- le recueil des eaux de pluie et des liquides de lavage en provenance du pare-brise, afin que ces liquides ne viennent pas mouiller le filtre à pollens.

En effet, si le filtre à pollens est mouillé, il devient source d'odeurs qui se répandent dans l'habitacle et source d'embuage pour le pare-brise.

La grille d'auvent comprend généralement une gouttière ou écope, disposée au dessous de la grille d'auvent, qui permet de canaliser ces liquides vers un lieu d'évacuation distinct de celui de la captation d'air circulant au travers du filtre à pollens. La fonction d'évacuation vers le sol, extérieurement au véhicule, peut ensuite être assurée par un collecteur en tôle ou mixte, c'est-à-dire constitué de deux pièces, l'une en tôle et l'autre en plastique.

Le filtre à pollens doit pouvoir être changé aisément. Il est généralement logé sous la plage avant, à l'avant du tableau de bord. Il est donc en retrait, vers l'arrière du véhicule, relativement à la grille d'auvent. Son accès est impossible depuis le compartiment moteur, séparé de la zone d'auvent. Une trappe est donc généralement prévue au niveau de la grille d'auvent pour donner accès au filtre à pollens et permettre son extraction au travers de la grille d'auvent. Cette trappe est par exemple ajourée, formant ainsi une entrée d'air supplémentaire pour le captage de l'air destiné à l'habitacle (cf. FR 2710009A). Cet ajourage présente néanmoins un risque de passage d'eau, notamment d'eau de pluie, susceptible d'être entraînée avec de l'air jusqu'au filtre à pollens.

Un but de l'invention est de proposer un dispositif d'accès au filtre à air, par exemple à pollens, permettant de simplifier la grille d'auvent et ses accessoires, tout en assurant une meilleure protection du filtre à air. Selon l'invention, ce but est atteint par l'ensemble selon la revendication 1

Ce déflecteur d'eau peut avantageusement avoir sensiblement la forme d'une palette de faible épaisseur, sensiblement verticale. La palette peut notamment comprendre, sur une face avant, des nervures pour diriger vers le bas les liquides sur le déflecteur. Avantageusement, la palette possède un bord inférieur formant un point bas, de préférence en forme de pointe dirigée vers le bas. Lorsque la trappe est montée sur la grille d'auvent, pour mieux garantir que du liquide s'écoulant depuis le point bas n'est pas entraîné dans le filtre, le niveau du point bas est inférieur à un niveau d'une entrée d'air du filtre à air.

Pour limiter la chute libre d'un écoulement du liquide depuis le point bas, pendant laquelle un courant d'air pourrait provoquer la dispersion de l'écoulement, on préfère disposer le point bas de sorte que, lorsque la trappe est montée sur la grille d'auvent, le point bas est proche, vers le bas, d'une paroi de la zone d'auvent prévue pour la collecte de cet écoulement de liquide.

La palette s'étend avantageusement vers le haut depuis le fond de la gouttière, dans le prolongement d'un bord arrière de la gouttière, ce qui assure une continuité du guidage du liquide dans la gouttière. L'ouverture d'évacuation est tout aussi avantageusement formée dans le prolongement d'au moins une partie arrière du fond de la gouttière, ce qui garanti que sensiblement la totalité de du liquide guidé par la gouttière jusqu'au déflecteur d'eau est effectivement défléchie par celui-ci.

Pour alimenter le filtre en air, la trappe selon l'invention comprend avantageusement des moyens de prise d'air. Ces moyens de prise d'air peuvent comprendre au moins une bouche ouverte vers l'avant par une ouverture de prise d'air et une voûte formant déflecteur d'air pour orienter selon un chemin, vers le bas, l'air absorbé par ladite ouverture d'air. L'ouverture de prise d'air peut s'étendre vers le haut à partir d'un bord supérieur du déflecteur d'eau.

Les moyens de prise d'air peuvent en outre comprendre une grille s'étendant vers l'arrière, sensiblement depuis le bord supérieur du déflecteur d'eau, et comprenant des ailettes formées et disposées pour diriger l'air absorbé selon le chemin vers le bas, la voûte étant formée entre un bord arrière de la grille et un bord supérieur de l'ouverture de prise d'air.

En outre, un ensemble de grille d'auvent d'un véhicule automobile selon l'invention pour permettre l'accès à un filtre à air au travers de la grille d'auvent, la grille d'auvent comprenant une gouttière destinée notamment à recueillir des liquides de ruissellement en provenance d'un pare-brise, et une trappe, **caractérisé en ce qu**'il comprend des moyens de fixation mutuelle et amovible de la trappe avec la grille d'auvent la trappe comprenant un déflecteur d'eau disposé de sorte qu'il forme devant lui, entre lui et un fond de la gouttière, une ouverture d'évacuation, le déflecteur d'eau s'étendant vers le bas relativement au fond de la gouttière.

D'autres particularités et avantages de l'invention ressortiront encore de la description ci-après, relative à des exemples non limitatifs. Dans la description, les termes:
- longitudinal qualifie quelque chose s'étendant selon un axe longitudinal d'un véhicule, notamment d'un véhicule équipé de l'invention ;
- transversal qualifie quelque chose s'étendant selon un plan perpendiculaire à un axe longitudinal du véhicule ;
- à droite signifie du côté droit quand on regarde dans le sens de la marche avant du véhicule.

Les niveaux et les positions sont considérés pour un véhicule reposant sur un sol horizontal.

Aux dessins annexés :
- la figure 1 est une vue en coupe longitudinale partielle représentant la disposition d'un mode de réalisation pour une trappe d'accès selon l'invention relativement au pare-brise et au filtre à pollens d'un véhicule automobile, les figures suivantes illustrant le même mode de réalisation ;
- la figure 2 est une vue vers l'avant, depuis sous la grille d'auvent, montrant la disposition de la trappe d'accès, et la façon d'accéder au filtre à pollens au travers d'une ouverture prévue pour recevoir cette trappe;
- la figure 3 est une coupe sensiblement longitudinale de la trappe d'accès et des éléments qui l'environnent ;
- la figure 4 est une vue de face de la trappe selon l'invention, isolée ;
- la figure 5 est une vue, depuis la gauche du véhicule, plongeante et transversale, de la trappe selon l'invention, en place dans la grille d'auvent;
- la figure 6 est une vue partielle, par l'arrière, de la trappe selon l'invention ; et,
- les figures 7 à 10, sont des coupes de la trappe, selon les plans VII-VII à X-X de la figure 4.

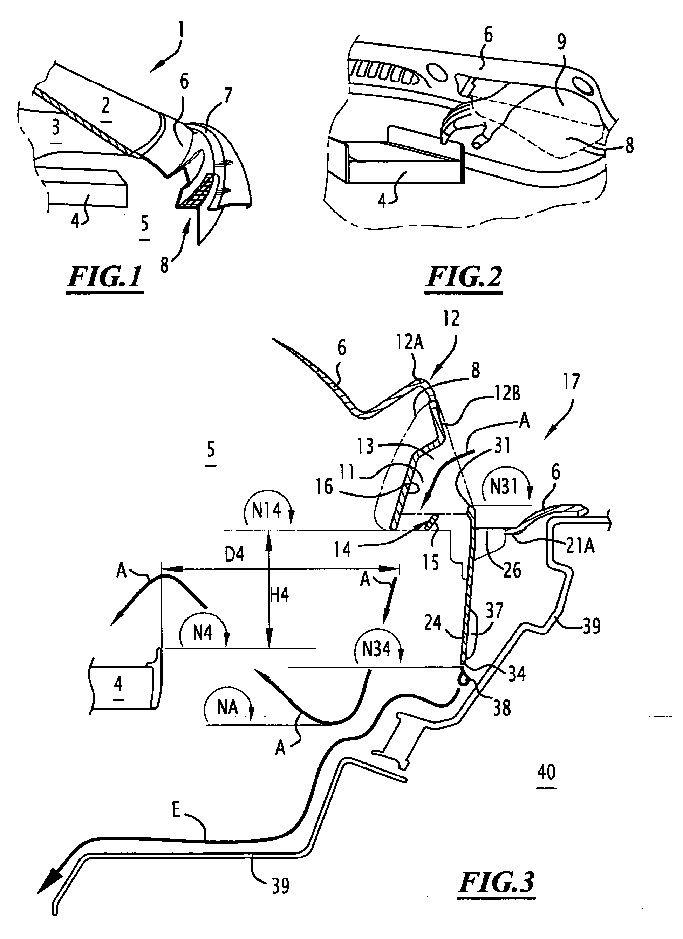

La figure 1 est une vue en coupe partielle d'un véhicule automobile, ici une voiture 1. Cette coupe est réalisée côté passager, et présente une vue en direction de la gauche, c'est-à-dire vers le côté du conducteur. Ainsi, l'avant est à la droite de la figure 1. Sur cette vue, on peut voir une partie basse d'un pare-brise 2 de la voiture 1, une partie correspondante de la plage avant 3, et un filtre à pollens 4, ci-après « le filtre ». Le filtre 4 est destiné à alimenter un groupe de climatisation, non représenté aux figures. Dans l'exemple illustré, le filtre 4 est disposé à droite, sous la plage avant 3, dans un volume 5 appelée zone d'auvent. Une grille d'auvent 6 prolonge le pare-brise vers l'avant. Une gouttière 7 est formée dans la grille d'auvent 6 pour recueillir des liquides s'écoulant depuis le pare-brise, notamment des eaux de pluie et des liquides de lavage. La gouttière permet l'évacuation latérale de ces liquides. Une trappe 8 selon l'invention équipe la grille d'auvent 6, au voisinage d'une extrémité la plus à droite de la gouttière 7, à proximité du filtre 4.

La trappe 8 est montée dans une ouverture 9 de la grille d'auvent 6. Ainsi, une fois la trappe 8 retirée de l'ouverture, il est possible, comme particulièrement illustré à la figure 2, d'accéder au filtre. Ainsi, le filtre peut être aisément retiré ou remplacé, au travers de l'ouverture 9. A la figure 2, la position de la trappe 8 avant retrait est illustrée par des traits interrompus.

Une autre fonction principale de la trappe 8 est de former une prise d'air pour le groupe de climatisation, donc pour le filtre 4. Selon l'invention, la trappe 8 comprend des moyens qui permettent à la fois :
- son montage/démontage aisé afin de libérer l'ouverture autant que de besoin ;
- la prise d'air ;
- la protection du filtre contre des projections ou des ruissellements de liquides ;
   et,
- l'évacuation de liquides de ruissellement issus de la gouttière 7.

Ces moyens seront décrits dans ce qui suit, en référence aux figures 3 à 10. Le fonctionnement de la trappe 8 sera plus particulièrement illustré par la figure 3. A la figure 3, les traits mixtes représentent les volumes de la trappe qui sont en dehors du plan de coupe de la figure.

La trappe comprend trois bouches 11 formant prise d'air pour le groupe de climatisation. Ces bouches s'ouvrent vers l'avant, dans un bossage 12 formé par une partie 12A de la grille d'auvent 6 et une partie 12B de la trappe 8. La partie 12B est constitutive d'une face avant de la trappe. Cette face avant 12B est légèrement inclinée vers l'arrière. Chaque bouche 11 est formée entre une ouverture de prise d'air 13 respective dans la face avant 12B et une grille 14 sensiblement horizontale. Une voûte 16 de la bouche 11 forme déflecteur d'air 16 et s'étend depuis le haut de l'ouverture 13 jusqu'à l'arrière de la grille 14.

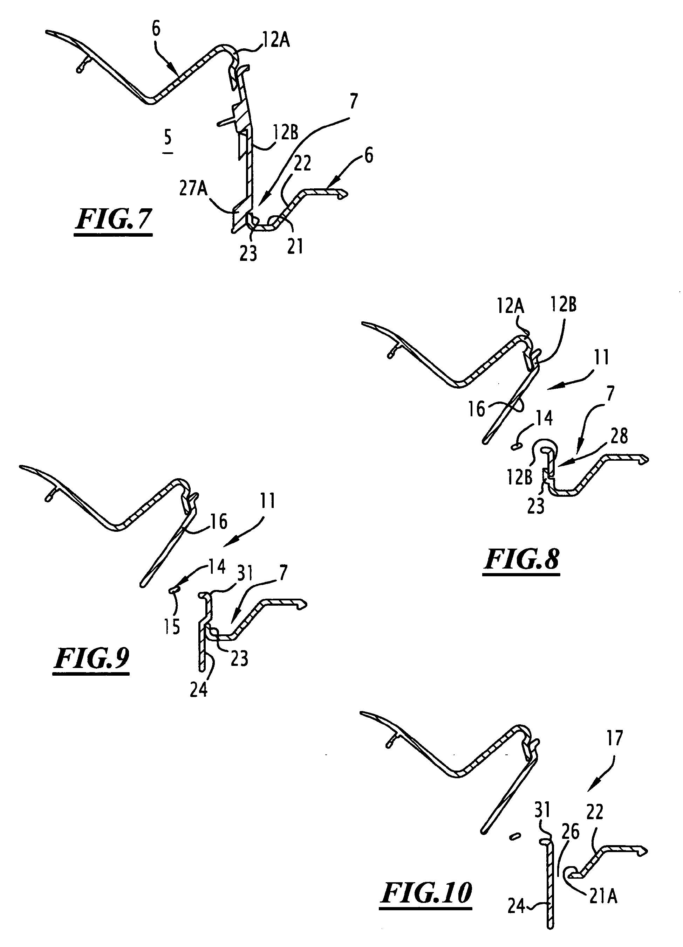

A la figure 3, la voûte 16 est formée de deux plans, un premier s'étendant depuis l'arrière de la grille 14 vers le haut, légèrement incliné vers l'avant. Ce premier plan est ensuite prolongé par un autre plus proche de l'horizontale et s'étendant vers l'avant jusqu'à un bord supérieur de l'ouverture 13. Aux figures 7 à 10, la voûte 16 est simplifiée, formée d'un seul plan incliné vers l'avant et s'étendant depuis l'arrière de la grille 14, jusqu'au bord supérieur de l'ouverture de prise d'air 13.

La grille 14 est formée d'ailettes 15, orientées pour diriger le flux d'air.

La trappe 8 comprend en outre des moyens pour évacuer les liquides collectés par la gouttière 7, dans une zone d'évacuation 17. Des coupes de la zone d'évacuation 17 sont particulièrement représentées aux figures 3 et 10.

Dans une zone courante, c'est à dire en dehors de la zone d'évacuation 17, la gouttière 7 est formée d'un fond 21, d'une rive avant 22 et d'une rive arrière 23. Dans la zone d'évacuation (voir particulièrement la figure 10), la gouttière 7 est tronquée, de sorte qu'elle ne conserve que sa rive avant 22 et une partie avant 21A du fond 21. Dans cette même zone d'évacuation, la trappe 8 comprend une palette 24 venant sensiblement se substituer à la rive arrière 23. La palette 24 forme entre elle et la partie 21A du fond 21 de la gouttière 7, une ouverture d'évacuation 26.

La trappe 8 comprend, à sa périphérie, des moyens 27 pour son encliquetage sur la grille d'auvent 6. En particulier, il comprend une paire d'ergots 27A,27B, chacun disposé à une extrémité transversale de la trappe 8, de sorte qu'ils viennent s'encliqueter à l'arrière de la rive arrière 23 de la gouttière 7. La figure 7 est une coupe réalisée à l'endroit de l'ergot 27A le plus à gauche de la paire d'ergots. Les moyens 27 comprennent deux autres ergots 27C, 27D prévus sur le bord supérieur de la trappe, entre les bouches 11, et s'encliquettent derrière la partie 12A de la grille d'auvent 6. Enfin, les moyens 27 comprennent 2 ergots latéraux 27E, 27F qui s'encliquettent sur les bords latéraux de l'ouverture 9.

La figure 8 illustre une zone de recouvrement 28 entre la rive 23 et une partie basse de la face avant 12B de la trappe 8. Cette zone de recouvrement s'étend depuis l'extrémité la plus à gauche de la trappe 8, vers la droite jusqu'à la palette 24. Dans cette zone, la face avant 12B de la trappe vient recouvrir par l'avant et depuis le haut la rive 23, permettant d'assurer une étanchéité aux liquides circulant dans la gouttière 7. Il existe un risque que du liquide issu de la gouttière forme des gouttes à l'endroit de l'ergot 27A. Cet ergot est positionné à distance de la palette 24, c'est-à-dire séparé de la palette par la zone de recouvrement 28. Ainsi, une goutte qui se formerait sur l'ergot 27A ne serait pas entraînée par un courant d'air vers le filtre à pollens 4.

La figure 9 illustre la zone où naît l'extrémité gauche de la palette 24. La palette est dans un prolongement sensiblement vertical de la face 12B, en recouvrement, dans cette zone, de la rive 23, la rive 23 y étant positionnée devant la palette.

Au-delà, vers la droite, de la zone de naissance de la palette, la rive 23 est interrompue, ainsi que la partie arrière du fond 21, pour laisser place, plus à droite, à la zone d'évacuation décrite plus haut.

La palette est de faible épaisseur, sensiblement plane et verticale. Elle a un bord supérieur 31 sensiblement horizontal, situé plus haut que le fond 21 de la gouttière 7. Le bord supérieur 31 constitue un bord avant des grilles 14.

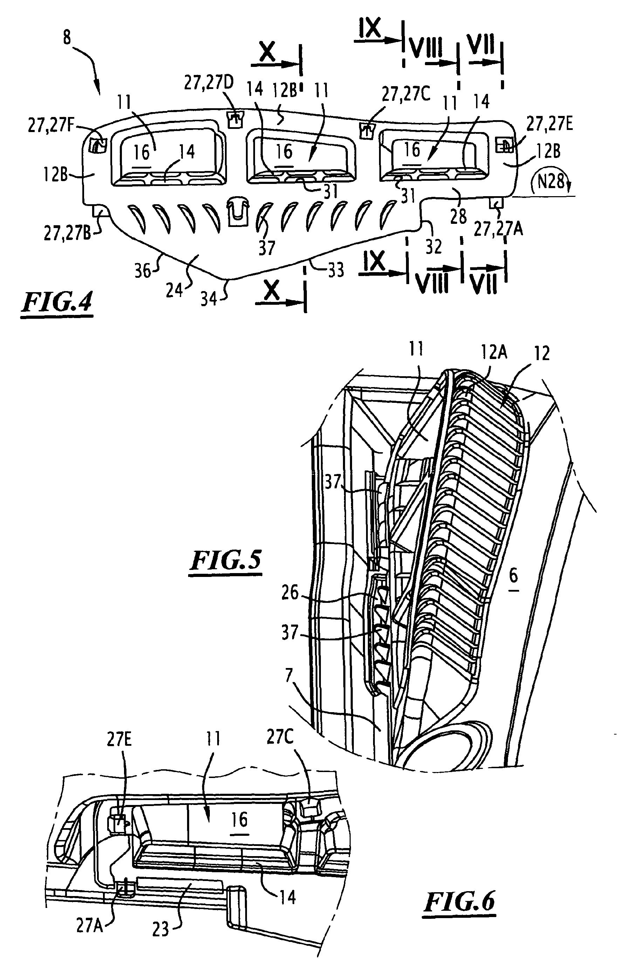

On va décrire la palette, notamment en référence à la figure 4 qui représente une vue de face de la trappe 8, isolée. A son extrémité gauche, c'est-à-dire dans la zone de naissance, la palette 24 comprend un bord gauche 32 d'étendant sensiblement verticalement. A son extrémité inférieure, le bord gauche est prolongé vers la droite et vers le bas par un demi bord inférieur gauche 33 qui descend en pente douce, vers la droite, jusqu'à une pointe 34 formant un point pas de la palette 24 et de la trappe 8. Depuis la pointe 34, le demi bord inférieur gauche 33 se prolonge par un demi bord inférieur droit 36, qui remonte vers la droite et selon une pente moins douce, sensiblement jusqu'à se raccorder avec la façade 12B, à proximité d'une extrémité droite de la trappe 8, par un bord arrondi se terminant verticalement à un niveau qui est sensiblement le niveau inférieur N28 de la façade 12B dans la zone de recouvrement 28.

Des nervures 37, qui dans l'exemple illustré sont à peu près rectilignes, sont disposées sur la face avant de la palette, et orientées de sorte que les liquides ruisselant sur cette face avant, soient dirigés vers la pointe 34.

Comme illustré à la figure 3, le niveau N34 de la pointe 34 est inférieur à un niveau supérieur N4 du filtre 4. Le niveau N31 du bord supérieur 31 est légèrement supérieur au niveau N14 du bord inférieur du déflecteur d'air d'une bouche. La différence de niveaux N31-N14 correspond sensiblement à l'épaisseur d'une grille 14 correspondante.

On va maintenant décrire le fonctionnement de la trappe 8, particulièrement en référence à la figure 3.

L'air absorbé par chaque bouche 11 suit un chemin illustré schématiquement par des flèches A. L'orientation du déflecteur 16 dirige l'air vers le bas, de sorte que l'air qui est aspiré par le filtre a généralement d'abord atteint un niveau NA inférieur au niveau supérieur N4 du filtre, le niveau N4 étant franchi par l'air avant son aspiration par le filtre 4. Dans sa descente vers le niveau NA, l'air peut entraîner des liquides, notamment des gouttelettes d'eau de pluie qui auraient pénétré par la bouche 11. Alors qu'après avoir atteint le niveau NA l'air change de direction vers le haut suivant le chemin A, pour être aspiré par le filtre, les gouttelettes d'eau, du fait de leur masse, continuent vers le bas pour être évacuées gravitairement.

Comme la voûte 16, les ailettes 15 de la grille 14 sont formées et disposées pour diriger l'air absorbé par les bouches 11 selon le chemin A.

Les liquides collectés dans la gouttière 7 et guidés par celle-ci jusqu'à la trappe 8 sont recueillis par la face avant de la palette 24. Ces liquides sont ensuite dirigés gravitairement et par les nervures 37, à travers l'ouverture d'évacuation 26 vers le bord inférieur 33,36 de la palette 24. Arrivés sur le bord inférieur, les liquides y sont maintenus par capillarité et s'y écoulent gravitairement dirigés vers la pointe 34. Arrivés à la pointe, ils y forment un écoulement, par exemple une ou des gouttes 38 ou un écoulement plus continu. Concentré à la pointe 34, l'écoulement ainsi formé atteint une masse généralement suffisante pour ne pas être entraîné par de l'air qui serait absorbé par l'ouverture d'évacuation 26, ou par de l'air circulant selon le chemin A. Cet écoulement s'évacue alors gravitairement vers le bas selon un chemin E, où il est rejoint par l'eau issue des bouches 11, parcourant des parois 39 séparant la zone d'auvent 5 d'avec le compartiment moteur 40. Ces parois forment un collecteur 39 pour conduire et évacuer les liquides sous la voiture, vers le sol.

Bien sûr, l'invention n'est pas limitée aux exemples qui viennent d'être décrits et de nombreux aménagements peuvent être apportés à ces exemples sans sortir du cadre de l'invention.

En particulier, la droite et la gauche peuvent être inversées par rapport aux exemples donnés, notamment pour des véhicules à conduite à droite, la trappe pouvant alors être symétrique à celle décrit.

## Revendications

1. Ensemble de grille d'auvent (6,8) pour un véhicule automobile, comprenant une grille d'auvent (6) ayant une gouttière (7) notamment destinée à recueillir des liquides de ruissellement en provenance d'un pare-brise (2), et une trappe (8) pour permettre l'accès à un filtre à air (4) au travers d'une grille d'auvent (6), **caractérisé en ce que** ladite trappe comprend des moyens (27) de fixation amovible de la trappe sur la grille d'auvent (6) et un déflecteur d'eau (24) disposé de sorte qu'il forme devant lui, entre lui et un fond (21,21 A) de ladite gouttière, une ouverture d'évacuation (26), ledit déflecteur d'eau s'étendant vers le bas relativement au fond de ladite gouttière.

2. Ensemble selon la revendication 1, **caractérisé en ce que** le déflecteur (24) a sensiblement la forme d'une palette de faible épaisseur, sensiblement verticale.

3. Ensemble selon la revendication 2, **caractérisé en ce que** ladite palette (24) comprend, sur une face avant, des nervures (37) pour diriger vers le bas les liquides sur le déflecteur.

4. Ensemble selon la revendication 2 ou 3, **caractérisé en ce que** ladite palette (24) a un bord inférieur (33,36) formant un point bas, de préférence en forme de pointe (34) dirigée vers le bas.

5. Ensemble selon la revendication 4, **caractérisé en ce que,** lorsque ladite trappe (8) est montée sur la grille d'auvent, le niveau (N34) du point bas est inférieur à un niveau (N4) d'une entrée d'air du filtre à air (4).

6. Ensemble selon la revendication 3 ou 4, **caractérisé en ce que,** lorsque ladite trappe (8) est montée sur la grille d'auvent, le point bas est proche, vers le bas d'une paroi (39) de la zone d'auvent, prévue pour la collecte de liquide.

7. Ensemble selon l'une des revendications 2 à 6, **caractérisé en ce que** la palette s'étend vers le haut depuis le fond (21 A) de la gouttière (7), dans le prolongement d'un bord arrière (23) de la gouttière (7), ladite ouverture d'évacuation (26) étant formée dans le prolongement d'au moins une partie arrière du fond (21) de ladite gouttière (7).

8. Ensemble selon l'une des revendications 1 à 7, **caractérisé en ce qu'**elle comprend des moyens de prise d'air comprenant au moins une bouche (11) ouverte vers l'avant par une ouverture de prise d'air (13) et une voûte (16) formant déflecteur d'air pour orienter selon un chemin (A) vers le bas l'air absorbé par ladite ouverture (13) et **en ce que** l'ouverture de prise d'air (13) s'étend vers le haut à partir d'un bord supérieur (31) du déflecteur d'eau (24).

9. Ensemble selon la revendication 8, **caractérisé en ce que** les moyens de prise d'air comprennent en outre une grille (14) s'étendant vers l'arrière, sensiblement depuis le bord supérieur (31) du déflecteur d'eau, ladite grille comprenant des ailettes (15) formées et disposées pour diriger l'air absorbé selon ledit chemin (A) vers le bas, la voûte (16) étant formée entre un bord arrière de la grille et un bord supérieur de l'ouverture de prise d'air (13).

10. Ensemble selon l'une des revendications 1 à 9, **caractérisé en ce qu'**il comprend des moyens (27) de fixation mutuelle et amovible de la trappe avec la grille d'auvent, la trappe comprenant un déflecteur d'eau (24) disposé de sorte qu'il forme devant lui, entre lui et un fond de la gouttière, une ouverture d'évacuation, le déflecteur d'eau s'étendant vers le bas relativement au fond de la gouttière.

## Claims

1. Cowl vent grille assembly (6, 8) for an automobile vehicle, comprising a cowl vent (6) having a gutter (7) in particular intended to collect run-off liquids originating from a windscreen (2), and a flap (8) to permit access to an air filter (4) through a cowl vent grille (6), **characterized in that** the said flap comprises means (27) for removably fixing the flap on the cowl vent grille (6) and a water deflector (24) disposed such that it forms in front of it, between itself and a base (21, 21A) of the said gutter, an evacuation opening (26), the said water deflector extending downwards relative to the base of the said gutter.

2. Assembly according to Claim 1, **characterized in that** the deflector (24) has substantially the shape of a substantially vertical blade of small thickness.

3. Assembly according to Claim 2, **characterized in that** the said blade (24) comprises, on a front face, ribs (37) to direct downwards the liquids on the deflector.

4. Assembly according to Claim 2 or 3, **characterized in that** the said blade (24) has a lower edge (33, 36) forming a bottom point, preferably in the shape of a downwardly directed point (34).

5. Assembly according to Claim 4, **characterized in that**, when the said flap (8) is mounted on the cowl vent grille, the level (N34) of the bottom point is lower than a level (N4) of an air inlet of the air filter (4).

6. Assembly according to Claim 3 or 4, **characterized in that**, when the said flap (8) is mounted on the cowl vent grille, the bottom point is close, towards the bottom of a wall (39) of the cowl zone, provided for the collection of liquid.

7. Assembly according to one of Claims 2 to 6, **characterized in that** the blade extends upwards from the base (21A) of the gutter (7), in the extension of a rear edge (23) of the gutter (7), the said evacuation opening (26) being formed in the extension of at least a rear part of the base (21) of the said gutter (7).

8. Assembly according to one of Claims 1 to 7, **characterized in that** it comprises air inlet means comprising at least one orifice (11) open towards the front through an air inlet opening (13) and an arch (16) forming an air deflector to direct along a path (A) downwards the air which is absorbed by the said opening (13) and **in that** the air inlet opening (13) extends upwards from an upper edge (31) of the water deflector (24).

9. Assembly according to Claim 8, **characterized in that** the air inlet means further comprise a grille (14) extending towards the rear, substantially from the upper edge (31) of the water deflector, the said grille comprising small wings (15) formed and disposed to direct the absorbed air along the said path (A) downwards, the arch (16) being formed between a rear edge of the grille and an upper edge of the air inlet opening (13).

10. Assembly according to one of Claims 1 to 9, **characterized in that** it comprises means (27) for the mutual and removable fixing of the flap with the cowl vent grille, the flap comprising a water deflector (24) disposed such that it forms in front of t, between it and a base of the gutter, an evacuation opening, with the water deflector extending downwards relative to the base of the gutter.

## Patentansprüche

1. Windlaufgittereinheit (6, 8) für Kraftfahrzeug, die ein Windlaufgitter (6) aufweist, das eine Rinne (7) aufweist, die insbesondere dazu bestimmt ist, Rieselflüssigkeiten, die von einer Windschutzscheibe (2) kommen, aufzufangen, und eine Klappe (8), um den Zugang zu einem Luftfilter (4) durch ein Windlaufgitter (6) zu erlauben, **dadurch gekennzeichnet, dass** die Klappe Mittel (27) zum abnehmbaren Befestigen der Klappe auf dem Windlaufgitter (6) und einen Wasserablenker (24) aufweist, der derart angeordnet ist, dass er vor sich, zwischen ihm und einem Grund (21, 21A) der Rinne eine Ableitöffnung (26) bildet, wobei sich der Wasserablenker in Bezug zu dem Grund der Rinne nach unten erstreckt.

2. Einheit nach Anspruch 1, **dadurch gekennzeichnet, dass** der Ablenker (24) im Wesentlichen die Form einer Schaufel mit geringer Stärke hat, die im Wesentlichen vertikal ist.

3. Einheit nach Anspruch 2, **dadurch gekennzeichnet, dass** die Schaufel (24) auf einer Vorderseite Rippen (37) aufweist, um die Flüssigkeiten auf dem Ablenker nach unten zu lenken.

4. Einheit nach Anspruch 2 oder 3, **dadurch gekennzeichnet, dass** die Schaufel (24) einen unteren Rand (33, 36) hat, der einen Tiefpunkt bildet, vorzugsweise in Form einer Spitze (34) die nach unten gerichtet ist.

5. Einheit nach Anspruch 4, **dadurch gekennzeichnet, dass,** wenn die Klappe (8) auf das Windlaufgitter montiert ist, das Niveau (N34) des Tiefpunkt niedriger ist als ein Niveau (N4) eines Eingangs des Luftfilters (4).

6. Einheit nach Anspruch 3 oder 4, **dadurch gekennzeichnet, dass,** wenn die Klappe (8) auf das Windlaufgitter montiert ist, der Tiefpunkt zur Unterseite einer Wand (39) der Windlaufzone hin, die zum Sammeln von Flüssigkeit vorgesehen ist, nahe ist.

7. Einheit nach einem der Ansprüche 2 bis 6, **dadurch gekennzeichnet, dass** sich die Schaufel von dem Grund (21A) der Rinne (7) in der Verlängerung eines hinteren Rands (23) der Rinne (7) nach oben erstreckt, wobei die Ableitöffnung (26) in der Verlängerung mindestens eines hinteren Teils des Grunds (21) der Rinne (7) ausgebildet ist.

8. Einheit nach einem der Ansprüche 1 bis 7, **dadurch gekennzeichnet, dass** sie Mittel zum Aufnehmen von Luft aufweisen, die mindestens eine Öffnung (11) aufweisen, die zur Vorderseite hin über eine Luftaufnahmeöffnung (13) offen ist, und eine Wölbung (16), die einen Luftablenker bildet, um die von der Öffnung (13) absorbierte Luft entlang eines Wegs (A) nach unten zu lenken, und dass sich die Luftaufnahmeöffnung (13) ausgehend von einem oberen Rand (31) des Wasserablenkers (24) nach oben erstreckt.

9. Einheit nach Anspruch 8, **dadurch gekennzeichnet, dass** die Luftaufnahmemittel ferner ein Gitter (14) aufweisen, das sich im Wesentlichen ausgehend von dem oberen Rand (31) des Wasserablenkers nach hinten erstreckt, wobei das Gitter Rippen (15) aufweist, die ausgebildet und angeordnet sind, um die absorbierte Luft entlang des Wegs (A) nach unten zu lenken, wobei die Wölbung (16) zwischen einem hinteren Rand des Gitters und einem oberen Rand der Luftaufnahmeöffnung (13) ausgebildet ist.

10. Einheit nach einem der Ansprüche 1 bis 9, **dadurch gekennzeichnet, dass** sie Mittel (27) zum gegenseitigen und abnehmbaren Befestigen der Klappe an dem Windlaufgitter aufweist, wobei die Klappe einen Wasserablenker (24) aufweist, der derart angeordnet ist, dass er vor sich, zwischen ihm und einem Grund der Rinne eine Ableitöffnung bildet, wobei sich der Wasserablenker in Bezug zu dem Grund der Rinne nach unten erstreckt.
